# EUROPEAN PATENT SPECIFICATION

(11) **EP 3 987 701 B1**
(45) Date of publication and mention of the grant of the patent: **03.12.2025**
(21) Application number: 20733569.6
(22) Date of filing: 16.06.2020
(51) Int. Cl.: H04L 1/18

(54) **METHODS AND APPARATUSES FOR SEMI-PERSISTENT SCHEDULING**
VERFAHREN UND VORRICHTUNGEN FÜR SEMIPERSISTENTE PLANUNG
PROCÉDÉS ET APPAREILS POUR ORDONNANCEMENT SEMI-PERSISTANT

(30) Priority: 19.06.2019 US 201962863399 P; 14.08.2019 US 201962886582 P
(43) Date of publication of application: 27.04.2022
(73) Proprietor: TELEFONAKTIEBOLAGET LM ERICSSON (PUBL), 164 83 Stockholm (SE)
(72) Inventor: SINGH, Bikramjit, 02880 KIRKKONUMMI (FI); BLANKENSHIP, Yufei, KILDEER, Illinois 60047 (US); SHAPIN, Alexey, 976 32 LULEÅ (SE); ENBUSKE, Henrik, 113 41 STOCKHOLM (SE); ZOU, Zhenhua, 171 42 SOLNA (SE); DIACHINA, John Walter, GARNER, North Carolina 27529 (US); ZHANG, Jianwei, 170 62 SOLNA (SE)
(74) Representative: Ericsson
(86) International application number: PCT/EP2020/066542
(87) International publication number: WO 2020/254274

(56) References cited:
- WO-A1-2014/196616
- US-A1- 2019 045 533
- QUALCOMM INCORPORATED: "Summary #3 of Email discussion regarding the out-of-order HARQ issue", 8 April 2019 (2019-04-08), XP002800251, Retrieved from the Internet <URL:https://www.3gpp.org/ftp/TSG_RAN/WG1_RL1/TSGR1_97/Docs/R1-1907925.zip> [retrieved on 20200909]

## Description

### TECHNICAL FIELD

The present disclosure relates to wireless communication and in particular, to methods and apparatuses for semipersistent scheduling (SPS) in wireless communication networks.

### BACKGROUND

Currently, as per the Release-15 (Rel-15) specification of the Third Generation Partnership Project (3GPP), for a given wireless device (WD), if two hybrid automatic repeat request (HARQ) processes have overlapping timelines, the WD behavior is clearly defined, e.g., in the 3GPP Technical Standard (TS) 38.214, section 5.1 (references to TS 38.214 herein refer to version 15.5.0 of that TS). According to TS 38.214, section 5.1:
- "For any two HARQ process IDs in a given scheduled cell, if the UE [WD] is scheduled to start receiving a first PDSCH starting in symbol j by a PDCCH ending in symbol i, the WD is not expected to be scheduled to receive a PDSCH starting earlier than the ending symbol of the first PDSCH with a PDCCH that does not end earlier than symbol i";
where PDSCH is the physical downlink shared channel and PDCCH is the physical downlink control channel. This is referred to herein as "condition 1" or "the legacy rule".

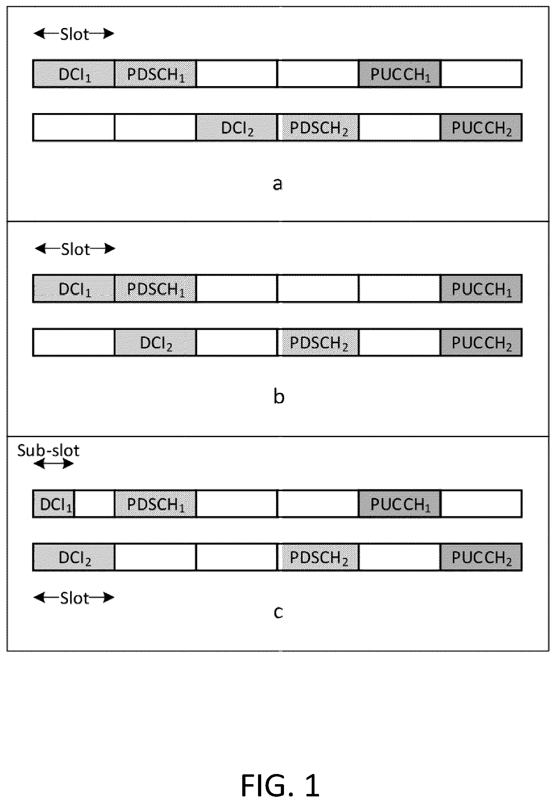

Therefore, in the cases depicted in FIG. 1, the WD processes the PDSCH corresponding to the downlink control information (DCI) that arrives first, which means the base station (e.g., a gNB in New Radio) keeps the order of the PDSCH and the physical uplink control channel (PUCCH) for HARQ Acknowledgment (HARQ-ACK) in accordance with DCI order. This may be referred to as in-order (HARQ) operation. In FIG. 1, box a, the DCIx provides PDSCHx and PUCCHx for a given HARQ process. In FIG. 1, box b, note that the PUCCHs for two different in-order HARQ processes can be multiplexed, and can overlap so that the order is not affected. In FIG. 1c, the DCI2 ends after DCI1, even though both DCIs start at the same time. Hence, DCI2 is regarded as a later arrival in this example, and thus the respective PDSCH and PUCCH allocations are in order with respect to DCIs in FIG. 1, box c.

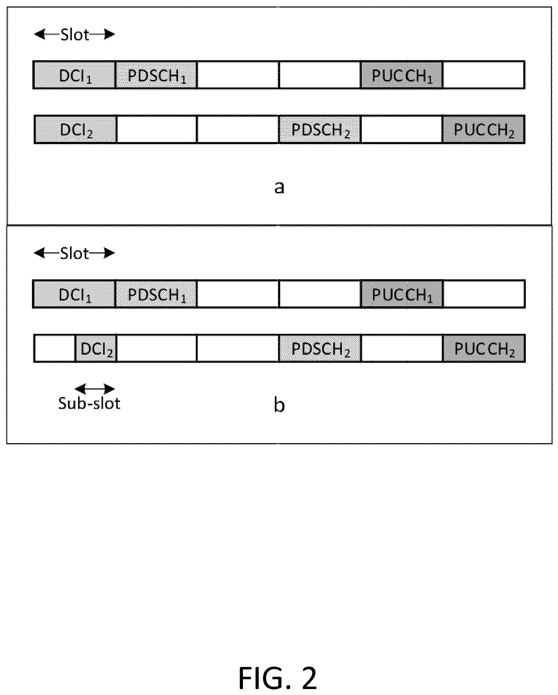

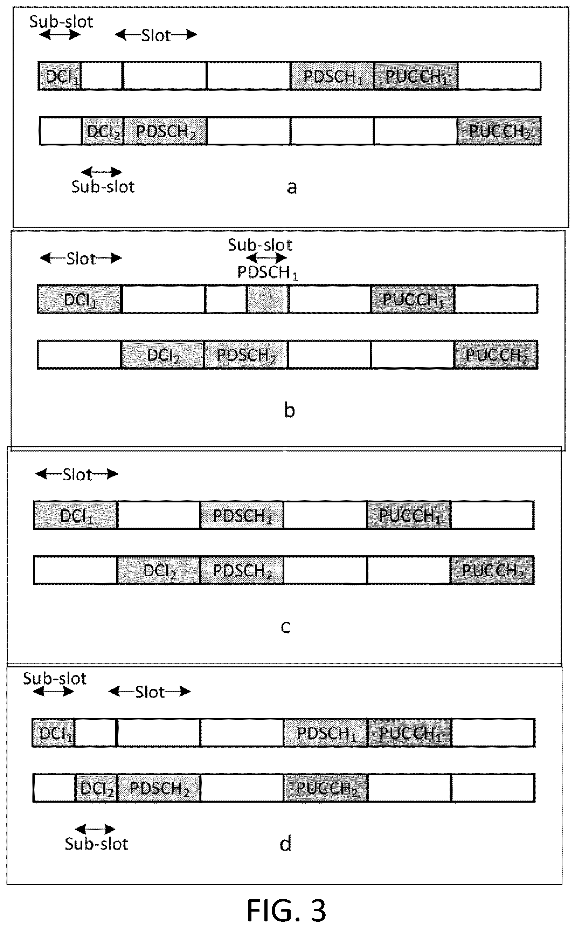

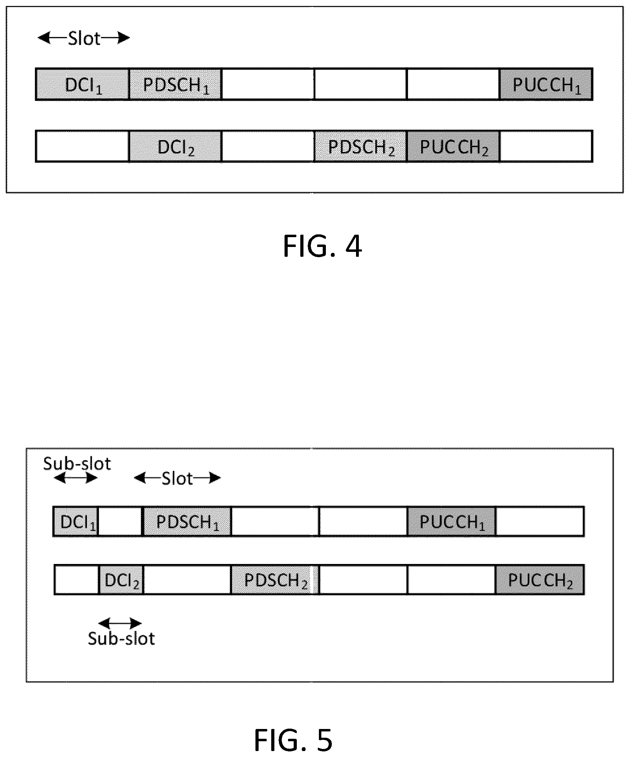

Scenarios where HARQ processes are not allocated per TS 38.214, section 5.1 may be classified as follows:
a) Out-of-order (OOO) scenarios:
   In OOO scenarios, if the condition in TS 38.214, section 5.1 (condition 1), is not satisfied, then the allocation is an out-of-order (OOO) operation, and this can be due to the following allocation issues or their combinations.
   1. DCI - Both DCIs end at the same time. See FIGS. 2a and 2b.
   2. PDSCH - the PDSCHs are not in order with respect to DCIs order. In FIGS. 3a, 3b and 3c, the PDSCH2 for later arriving DCI2 begins before the end of PDSCH1, which is inconsistent with the standard (TS 38.214).
   3. PUCCH - the PUCCHs are not in order with respect to DCI order. See FIG. 4.
b) Scheduling constrained scenarios:
   In scheduling constrained scenarios, even though condition 1 is satisfied, (i.e., HARQ processes are in order), the WD may not decode both PDSCHs if a condition is not satisfied. The scenario is depicted in FIG. 5 with back-to-back PDSCHs transmissions. The rule in TS 38.214, Section 5.3, states that:
   "For WD processing capability 2 with scheduling limitation when µ = 1, if the scheduled RB allocation exceeds 136 RBs, the WD defaults to capability 1 processing time. The WD may skip decoding a number of PDSCHs with last symbol within 10 symbols before the start of a PDSCH that is scheduled to follow Capability 2, if any of those PDSCHs are scheduled with more than 136 RBs with 30kHz SCS and following Capability 1 processing time."

Thus, according to this rule, the WD may skip decoding of a number of physical downlink shared channels that have a last symbol that is within 10 (for example) symbols of the start of the physical downlink shared channel scheduled to follow WD processing capability 2.

For services that may be defined as critical, such as ultra reliable and low latency communication (URLLC) services, the scheduling scenarios may be beneficial because data should be sent as soon as possible in URLLC, which may cause out of order transmissions. However, if the scenarios depicted in FIGS. 2 through 4 or their combinations happen, such transmissions may be deemed invalid in existing networks, and the WD is expected to skip decoding of invalid PDSCHs, which in principle could be URLLC data. This may be undesirable.

In addition, Release 15 considers single stream SPS and does not define a hybrid automatic repeat request (HARQ) design if there are two or more SPS streams or combinations between SPS and dynamic PDSCHs.

For 3GPP Release 16 (Rel-16), some related scheduling and out of order (OOO) HARQ proposals and observations have been considered. In Rel-16, there can be multiple SPS for which HARQ construction is currently undefined.

WO2014/196616 describes methods for use in control signalling in advanced wireless communication systems that support flexible allocation of TDD UL-DL configurations. Where HARQ-ACK bundling is used, PDCCH/EPDCCH transmissions indicating DL SPS release and PDSCH transmissions with corresponding PDCCH/EPDCCH are scheduled only on DL and/or special subframes in a DL association set which are not after the subframe in the DL association set carrying an UL grant. Where HARQ-ACK multiplexing is used, the value of the DL assignment index (1) is set to the number of subframes in the DL association set. Cross-subframe scheduling is also used.

Qualcomm Incorporated 3GPP submission R1-1907925 "Summary #3 of Email discussion regarding the out-of-order HARQ issue" describes that under Rel. 15 NR configuration and scheduling limitations, even if the transmissions are out of order, the UE pipelining is not impacted. In case of out-of-order HARQ, the UE only needs to buffer the low priority HARQ-ACK and report it after the transmission of the high priority HARQ-ACK.

US2019/045533 describes mechanisms for reliability enhancement on control channel and data channel and mechanisms in URLLLC.

### SUMMARY

Some embodiments advantageously provide methods and wireless devices for out of order (OOO) operation involving semipersistent scheduling (SPS) in wireless communication networks.

The legacy rule may assume the case where a PDSCH is assigned using dynamic grants and can be redefined for the cases with PDSCH subject to DL semi-persistent scheduling (SPS). The same discussion can be extended to UL SPS (CG) grants.

Some embodiments provided herein define an out of order (OOO) condition in cases where semi-persistent scheduling is involved.

According to an aspect of the present disclosure, a wireless device, WD, configured to communicate with a network node is provided according to appended independent claim 1.

In some embodiments of this aspect, the OOO condition is based at least in part on at least a PDSCH time domain resource allocation. In some embodiments of this aspect, the OOO condition is based at least in part on an indication of a related hybrid automatic repeat request, HARQ, acknowledgement, ACK, timing. In some embodiments of this aspect, the processing circuitry is configured to when an OOO condition is detected, continue to process the at least one PDSCH being processed at a time of detection of the OOO condition. In some embodiments of this aspect, the processing circuitry is configured to when an OOO condition is detected as an overlap of at least two PDSCHs in time, prioritize the at least two PDSCHs. In some embodiments of this aspect, the processing circuitry is further configured to decode the PDSCH of the at least two PDSCHs having a higher priority; and determine to skip decoding the PDSCH of the at least two PDSCHs having a lower priority.

In some embodiments of this aspect, the processing circuitry is configured to when an OOO condition is detected as an overlap of at least two PDSCHs in time, determine the PDSCH of the at least two PDSCHs to decode and the PDSCH of the at least two PDSCH to skip decoding based at least in part on at least one of: a hybrid automatic repeat request, HARQ, acknowledgement, ACK, timing indicator, a relative timing between the at least two PDSCHs and a quality of service for each logical channel associated with the respective PDSCH. In some embodiments of this aspect, the processing circuitry is configured to determine the OOO condition by being configured to cause the WD to determine the OOO condition using a timing of a hypothetical downlink control information, DCI. In some embodiments of this aspect, the processing circuitry is further configured to cause the WD to indicate a maximum number of parallel PDSCH receptions on a same orthogonal frequency division multiplexing, OFDM, symbol per bandwidth part that the WD is capable of.

According another aspect of the present disclosure, a method performed by a wireless device, WD, is provided according to appended independent claim 9.

In some embodiments of this aspect, the OOO condition is based at least in part on at least a PDSCH time domain resource allocation. In some embodiments of this aspect, the OOO condition is based at least in part on an indication of a related hybrid automatic repeat request, HARQ, acknowledgement, ACK, timing. In some embodiments of this aspect, the method further includes when an OOO condition is detected, continuing to process the at least one PDSCH being processed at a time of detection of the OOO condition. In some embodiments of this aspect, the method further includes when an OOO condition is detected as an overlap of at least two PDSCHs in time, prioritizing the at least two PDSCHs.

In some embodiments of this aspect, the method further includes decoding the PDSCH of the at least two PDSCHs having a higher priority; and determining to skip decoding the PDSCH of the at least two PDSCHs having a lower priority. In some embodiments of this aspect, the method further includes when an OOO condition is detected as an overlap of at least two PDSCHs in time, determining the PDSCH of the at least two PDSCHs to decode and the PDSCH of the at least two PDSCH to skip decoding based at least in part on at least one of: a hybrid automatic repeat request, HARQ, acknowledgement, ACK, timing indicator, a relative timing between the at least two PDSCHs and a quality of service for each logical channel associated with the respective PDSCH. In some embodiments of this aspect, determining the OOO condition further comprises determining the OOO condition using a timing of a hypothetical downlink control information, DCI. In some embodiments of this aspect, the method further includes indicating a maximum number of parallel PDSCH receptions on a same orthogonal frequency division multiplexing, OFDM, symbol per bandwidth part that the WD is capable of.

The invention is defined by the appended independent claims. Further advantageous embodiments are set out in the appended dependent claims.

### BRIEF DESCRIPTION OF THE DRAWINGS

A more complete understanding of the present embodiments, and the attendant advantages and features thereof, will be more readily understood by reference to the following detailed description when considered in conjunction with the accompanying drawings wherein:
FIG. 1 is a diagram of scenarios for in-order HARQ processes;
FIG. 2 is a diagram of OOO scenarios where DCIs end at the same time;
FIG. 3 is a diagram of OOO PDSCH scenarios;
FIG. 4 is a diagram of an OOO HARQ-ACK scenario;
FIG. 5 is a diagram of back-to-back transmissions;
FIG. 6 illustrates an out of order (OOO) hybrid automatic repeat request (HARQ) scenario;
FIG. 7 is a timing diagram for two DL SPS for a WD, where the upper row corresponds to earlier DCI and the lower row corresponds to later DCI;
FIG. 8 is a schematic diagram of an exemplary network architecture illustrating a communication system connected via an intermediate network to a host computer according to the principles in the present disclosure;
FIG. 9 is a block diagram of a host computer communicating via a network node with a wireless device over an at least partially wireless connection according to some embodiments of the present disclosure;
FIG. 10 is a flowchart illustrating exemplary methods implemented in a communication system including a host computer, a network node and a wireless device for executing a client application at a wireless device according to some embodiments of the present disclosure;
FIG. 11 is a flowchart illustrating exemplary methods implemented in a communication system including a host computer, a network node and a wireless device for receiving user data at a wireless device according to some embodiments of the present disclosure;
FIG. 12 is a flowchart illustrating exemplary methods implemented in a communication system including a host computer, a network node and a wireless device for receiving user data from the wireless device at a host computer according to some embodiments of the present disclosure;
FIG. 13 is a flowchart illustrating exemplary methods implemented in a communication system including a host computer, a network node and a wireless device for receiving user data at a host computer according to some embodiments of the present disclosure;
FIG. 14 is a flowchart of an exemplary process in a wireless device according to some embodiments of the present disclosure;
FIG. 15 is a flowchart of an yet another exemplary process in a wireless device according to some embodiments of the present disclosure;
FIG. 16 is a diagram of dynamic allocation and where a PDSCH is part of an SPS assignment according to some embodiments of the present disclosure;
FIG. 17 is a diagram of a scenario with two semi-persistent schedules according to some embodiments of the present disclosure;
FIG. 18 shows allocations of physical downlink shared channels (PDSCHs) and HARQ-ACK responses for two different semipersistent scheduling (SPS) configurations according to some embodiments of the present disclosure;
FIG. 19 shows an out of order (OOO) condition according to some embodiments of the present disclosure;
FIG. 20 shows multiple timing offsets for a HARQ-ACK field for SPS according to some embodiments of the present disclosure; and
FIG. 21 shows HARQ patterns for PDSCH with an OOO condition according to some embodiments of the present disclosure.

### DETAILED DESCRIPTION

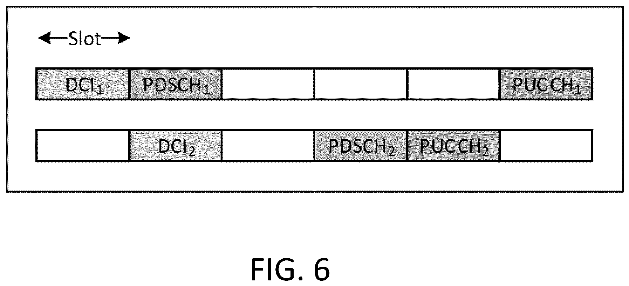

The legacy rule discussed above, which is applied to dynamic PDSCHs in 3GPP Rel-15, may not be utilized as such for detection rules involving the HARQ acknowledgment (ACK) response to PDSCHs that are semi-persistently scheduled (SPS). According to 3GPP TS 38.214, section 5.1, if HARQ processes are not in order, then a scheduling error is considered to have occurred. See FIG. 6 for example. However, this scenario is limited to dynamic PDSCHs in 3GPP Rel-15.

To resolve such scenarios (FIGS. 1-6), different proposals have been considered by the 3GPP. However, it is noted that the discussion about the in-order transmissions policy stated in TS 38.214, section 5.1, is based on DCI or PDCCH end time being used as a yardstick to e.g., determine whether the in-order transmissions policy is satisfied.

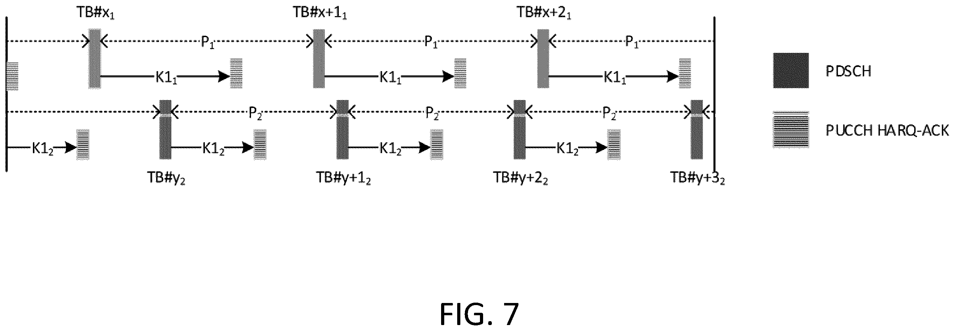

A problem is that known solutions may not be fully applicable if these PDSCHs are part of SPS(s). Semipersistent scheduling (SPS) is recurring scheduling, e.g., recurring PDSCHs for a single DCI (and/or RRC). In this case, the legacy rule becomes ambiguous. For instance, consider a scenario such as that shown in FIG. 7. Assume that DCI for SPS 1 allocation depicted with subscript 1 comes earlier than the DCI corresponding to SPS allocations for subscript 2. Then, according to TS 38.214, the transmissions in FIG. 7 will eventually become invalid because the PDSCHs corresponding to the earlier DCI (with subscript 1) should occur earlier than PDSCHs corresponding to the latter DCI (with subscript 2).

Some embodiments propose techniques and arrangements to handle such out of order operations with SPS and/or to address HARQ codebook design with multiple active SPS configurations for a WD.

Before describing in detail exemplary embodiments, it is noted that the embodiments reside primarily in combinations of apparatus components and processing steps related to methods and apparatuses involving semipersistent scheduling (SPS) in wireless communication networks, such as out of order operation (OOO) and hybrid automatic repeat request (HARQ) codebook design. Accordingly, components have been represented where appropriate by conventional symbols in the drawings, showing only those specific details that are pertinent to understanding the embodiments so as not to obscure the disclosure with details that will be readily apparent to those of ordinary skill in the art having the benefit of the description herein. Like numbers refer to like elements throughout the description.

As used herein, relational terms, such as "first" and "second," "top" and "bottom," and the like, may be used solely to distinguish one entity or element from another entity or element without necessarily requiring or implying any physical or logical relationship or order between such entities or elements. The terminology used herein is for the purpose of describing particular embodiments only and is not intended to be limiting of the concepts described herein. As used herein, the singular forms "a", "an" and "the" are intended to include the plural forms as well, unless the context clearly indicates otherwise. It will be further understood that the terms "comprises," "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

In embodiments described herein, the joining term, "in communication with" and the like, may be used to indicate electrical or data communication, which may be accomplished by physical contact, induction, electromagnetic radiation, radio signaling, infrared signaling or optical signaling, for example. One having ordinary skill in the art will appreciate that multiple components may interoperate and modifications and variations are possible of achieving the electrical and data communication.

In some embodiments described herein, the term "coupled," "connected," and the like, may be used herein to indicate a connection, although not necessarily directly, and may include wired and/or wireless connections.

The term "network node" used herein can be any kind of network node comprised in a radio network which may further comprise any of base station (BS), radio base station, base transceiver station (BTS), base station controller (BSC), radio network controller (RNC), g Node B (gNB), evolved Node B (eNB or eNodeB), Node B, multi-standard radio (MSR) radio node such as MSR BS, multi-cell/multicast coordination entity (MCE), integrated access and backhaul (IAB) node, relay node, integrated access and backhaul (IAB) node, donor node controlling relay, radio access point (AP), transmission points, transmission nodes, Remote Radio Unit (RRU) Remote Radio Head (RRH), a core network node (e.g., mobile management entity (MME), self-organizing network (SON) node, a coordinating node, positioning node, MDT node, etc.), an external node (e.g., 3rd party node, a node external to the current network), nodes in distributed antenna system (DAS), a spectrum access system (SAS) node, an element management system (EMS), etc. The network node may also comprise test equipment. The term "radio node" used herein may be used to also denote a wireless device (WD) such as a wireless device (WD) or a radio network node.

In some embodiments, the non-limiting terms wireless device (WD) or a user equipment (UE) are used interchangeably. The WD herein can be any type of wireless device capable of communicating with a network node or another WD over radio signals, such as wireless device (WD). The WD may also be a radio communication device, target device, device to device (D2D) WD, machine type WD or WD capable of machine to machine communication (M2M), low-cost and/or low-complexity WD, a sensor equipped with WD, Tablet, mobile terminals, smart phone, laptop embedded equipped (LEE), laptop mounted equipment (LME), USB dongles, Customer Premises Equipment (CPE), an Internet of Things (IoT) device, or a Narrowband IoT (NB-IOT) device etc.

Also, in some embodiments the generic term "radio network node" is used. It can be any kind of a radio network node which may comprise any of base station, radio base station, base transceiver station, base station controller, network controller, RNC, evolved Node B (eNB), Node B, gNB, Multi-cell/multicast Coordination Entity (MCE), IAB node, relay node, access point, radio access point, Remote Radio Unit (RRU) Remote Radio Head (RRH).

Note that although terminology from one particular wireless system, such as, for example, 3GPP LTE and/or New Radio (NR), may be used in this disclosure, this should not be seen as limiting the scope of the disclosure to only the aforementioned system. Other wireless systems, including without limitation Wide Band Code Division Multiple Access (WCDMA), Worldwide Interoperability for Microwave Access (WiMax), Ultra Mobile Broadband (UMB) and Global System for Mobile Communications (GSM), may also benefit from exploiting the ideas covered within this disclosure.

In some embodiments, the phrase "PDSCH subject to SPS" or the like is used and may indicate that the PDSCH is semi-persistently scheduled (SPS) e.g., as opposed to dynamically granted.

In some embodiments, the phrase "OOO condition" is used and may indicate a condition that if met (e.g., if determined by the WD to be met) may result in the WD considering the PDSCH invalid and/or resulting in a HARQ NACK for the PDSCH. Some embodiments of the present disclosure propose arrangements for determining an OOO condition according to a rule that is modified from the legacy rule to e.g., support data transmissions such as PDSCHs that are SPS.

In some embodiments, the term "overlap" is used and may encompass partial overlapping in time as well as fully overlapping.

In some embodiments, the phrase "parallel PDSCH receptions" is used and may indicate parallel in the frequency domain and over a same time resource, e.g., a same OFDM symbol.

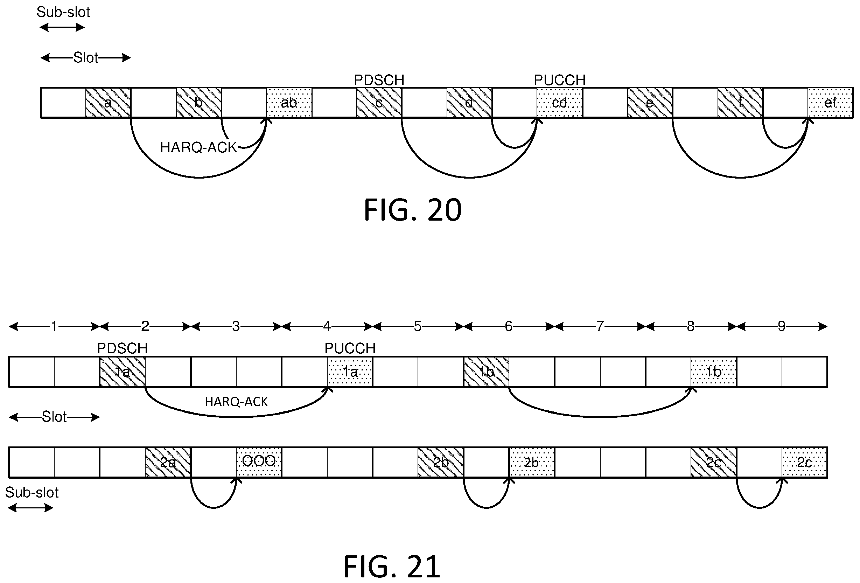

In some embodiments, an order of a first and second codebook are described as being not a same order as an order of PDSCHs and in such context the term "order" may be considered to refer to a sequence in the time domain such that, if for example, a first PDSCH is transmitted/scheduled *before* a second PDSCH, and the HARQ codebook acknowledging the first PDSCH is transmitted/scheduled *after* the HARQ codebook acknowledging the second PDSCH, the order of the codebooks may be considered to not follow the order of the PDSCHs (see e.g., FIG. 21 discussed below) since e.g., the HARQ for the first PDSCH is transmitted after the HARQ for the second PDSCH.

Note further, that functions described herein as being performed by a wireless device or a network node may be distributed over a plurality of wireless devices and/or network nodes. In other words, it is contemplated that the functions of the network node and wireless device described herein are not limited to performance by a single physical device and, in fact, can be distributed among several physical devices.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

In some embodiments, when at least one physical downlink shared channel (PDSCH), is subject to semi-persistent scheduling (SPS) a WD is configured to determine an out-of-order, OOO, condition that is independent of a relative timing of physical downlink control channel, PDCCH, signaling.

Some embodiments provide semipersistent scheduling (SPS), hybrid automatic repeat request (HARQ) codebook design for wireless communication networks.

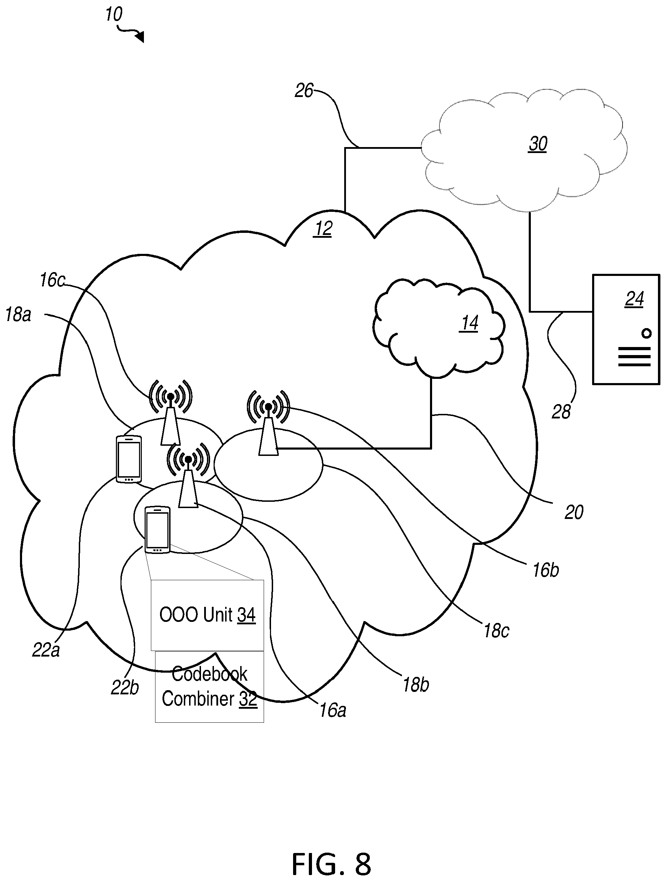

Referring again to the drawing figures, in which like elements are referred to by like reference numerals, there is shown in FIG. 8 a schematic diagram of a communication system 10, according to an embodiment, such as a 3GPP-type cellular network that may support standards such as LTE and/or NR (5G), which comprises an access network 12, such as a radio access network, and a core network 14. The access network 12 comprises a plurality of network nodes 16a, 16b, 16c (referred to collectively as network nodes 16), such as NBs, eNBs, gNBs or other types of wireless access points, each defining a corresponding coverage area 18a, 18b, 18c (referred to collectively as coverage areas 18). Each network node 16a, 16b, 16c is connectable to the core network 14 over a wired or wireless connection 20. A first wireless device (WD) 22a located in coverage area 18a is configured to wirelessly connect to, or be paged by, the corresponding network node 16c. A second WD 22b in coverage area 18b is wirelessly connectable to the corresponding network node 16a. While a plurality of WDs 22a, 22b (collectively referred to as wireless devices 22) are illustrated in this example, the disclosed embodiments are equally applicable to a situation where a sole WD is in the coverage area or where a sole WD is connecting to the corresponding network node 16. Note that although only two WDs 22 and three network nodes 16 are shown for convenience, the communication system may include many more WDs 22 and network nodes 16.

Also, it is contemplated that a WD 22 can be in simultaneous communication and/or configured to separately communicate with more than one network node 16 and more than one type of network node 16. For example, a WD 22 can have dual connectivity with a network node 16 that supports LTE and the same or a different network node 16 that supports NR. As an example, WD 22 can be in communication with an eNB for LTE/E-UTRAN and a gNB for NR/NG-RAN.

The communication system 10 may itself be connected to a host computer 24, which may be embodied in the hardware and/or software of a standalone server, a cloud-implemented server, a distributed server or as processing resources in a server farm. The host computer 24 may be under the ownership or control of a service provider or may be operated by the service provider or on behalf of the service provider. The connections 26, 28 between the communication system 10 and the host computer 24 may extend directly from the core network 14 to the host computer 24 or may extend via an optional intermediate network 30. The intermediate network 30 may be one of, or a combination of more than one of, a public, private or hosted network. The intermediate network 30, if any, may be a backbone network or the Internet. In some embodiments, the intermediate network 30 may comprise two or more sub-networks (not shown).

The communication system of FIG. 8 as a whole enables connectivity between one of the connected WDs 22a, 22b and the host computer 24. The connectivity may be described as an over-the-top (OTT) connection. The host computer 24 and the connected WDs 22a, 22b are configured to communicate data and/or signaling via the OTT connection, using the access network 12, the core network 14, any intermediate network 30 and possible further infrastructure (not shown) as intermediaries. The OTT connection may be transparent in the sense that at least some of the participating communication devices through which the OTT connection passes are unaware of routing of uplink and downlink communications. For example, a network node 16 may not or need not be informed about the past routing of an incoming downlink communication with data originating from a host computer 24 to be forwarded (e.g., handed over) to a connected WD 22a. Similarly, the network node 16 need not be aware of the future routing of an outgoing uplink communication originating from the WD 22a towards the host computer 24.

A wireless device 22 is configured to include a codebook combiner 32 which is configured to concatenate first and second codebooks.

A wireless device 22 is configured to include an OOO unit 34 which is configured to, when at least one physical downlink shared channel, PDSCH, is subject to semi-persistent scheduling, SPS, determine an out-of-order, OOO, condition that is independent of a relative timing of physical downlink control channel, PDCCH, signaling.

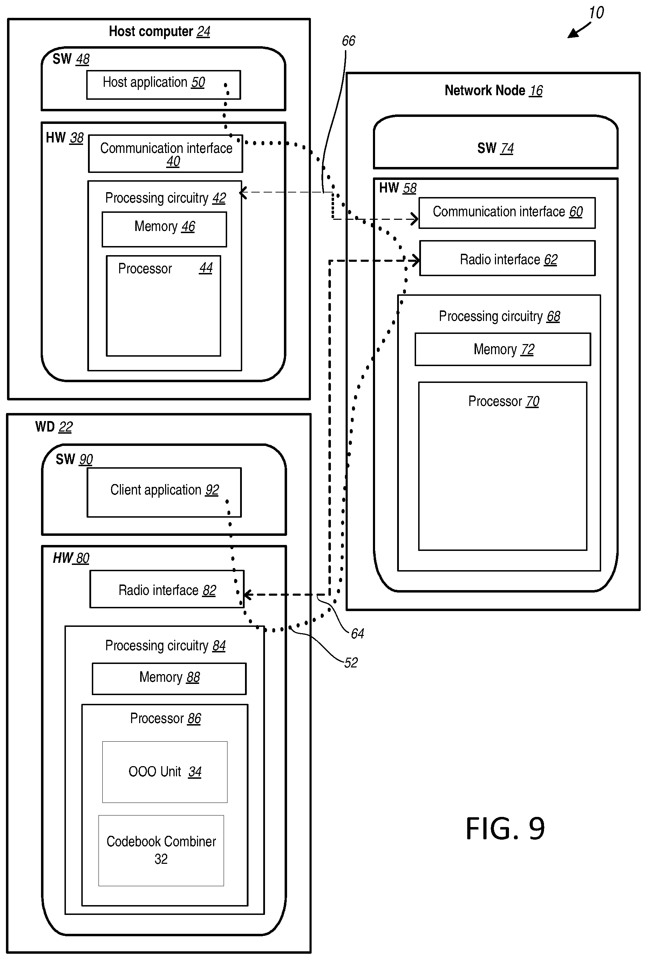

Example implementations, in accordance with an embodiment, of the WD 22, network node 16 and host computer 24 discussed in the preceding paragraphs will now be described with reference to FIG. 9. In a communication system 10, a host computer 24 comprises hardware (HW) 38 including a communication interface 40 configured to set up and maintain a wired or wireless connection with an interface of a different communication device of the communication system 10. The host computer 24 further comprises processing circuitry 42, which may have storage and/or processing capabilities. The processing circuitry 42 may include a processor 44 and memory 46. In particular, in addition to or instead of a processor, such as a central processing unit, and memory, the processing circuitry 42 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 44 may be configured to access (e.g., write to and/or read from) memory 46, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Processing circuitry 42 may be configured to control any of the methods and/or processes described herein and/or to cause such methods, and/or processes to be performed, e.g., by host computer 24. Processor 44 corresponds to one or more processors 44 for performing host computer 24 functions described herein. The host computer 24 includes memory 46 that is configured to store data, programmatic software code and/or other information described herein. In some embodiments, the software 48 and/or the host application 50 may include instructions that, when executed by the processor 44 and/or processing circuitry 42, causes the processor 44 and/or processing circuitry 42 to perform the processes described herein with respect to host computer 24. The instructions may be software associated with the host computer 24.

The software 48 may be executable by the processing circuitry 42. The software 48 includes a host application 50. The host application 50 may be operable to provide a service to a remote user, such as a WD 22 connecting via an OTT connection 52 terminating at the WD 22 and the host computer 24. In providing the service to the remote user, the host application 50 may provide user data which is transmitted using the OTT connection 52. The "user data" may be data and information described herein as implementing the described functionality. In one embodiment, the host computer 24 may be configured for providing control and functionality to a service provider and may be operated by the service provider or on behalf of the service provider. The processing circuitry 42 of the host computer 24 may enable the host computer 24 to observe, monitor, control, transmit to and/or receive from the network node 16 and or the wireless device 22.

The communication system 10 further includes a network node 16 provided in a communication system 10 and including hardware 58 enabling it to communicate with the host computer 24 and with the WD 22. The hardware 58 may include a communication interface 60 for setting up and maintaining a wired or wireless connection with an interface of a different communication device of the communication system 10, as well as a radio interface 62 for setting up and maintaining at least a wireless connection 64 with a WD 22 located in a coverage area 18 served by the network node 16. The radio interface 62 may be formed as or may include, for example, one or more RF transmitters, one or more RF receivers, and/or one or more RF transceivers. The communication interface 60 may be configured to facilitate a connection 66 to the host computer 24. The connection 66 may be direct or it may pass through a core network 14 of the communication system 10 and/or through one or more intermediate networks 30 outside the communication system 10.

In the embodiment shown, the hardware 58 of the network node 16 further includes processing circuitry 68. The processing circuitry 68 may include a processor 70 and a memory 72. In particular, in addition to or instead of a processor, such as a central processing unit, and memory, the processing circuitry 68 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 70 may be configured to access (e.g., write to and/or read from) the memory 72, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Thus, the network node 16 further has software 74 stored internally in, for example, memory 72, or stored in external memory (e.g., database, storage array, network storage device, etc.) accessible by the network node 16 via an external connection. The software 74 may be executable by the processing circuitry 68. The processing circuitry 68 may be configured to control any of the methods and/or processes described herein and/or to cause such methods, and/or processes to be performed, e.g., by network node 16. Processor 70 corresponds to one or more processors 70 for performing network node 16 functions described herein. The memory 72 is configured to store data, programmatic software code and/or other information described herein. In some embodiments, the software 74 may include instructions that, when executed by the processor 70 and/or processing circuitry 68, causes the processor 70 and/or processing circuitry 68 to perform the processes described herein with respect to network node 16.

The communication system 10 further includes the WD 22 already referred to. The WD 22 may have hardware 80 that may include a radio interface 82 configured to set up and maintain a wireless connection 64 with a network node 16 serving a coverage area 18 in which the WD 22 is currently located. The radio interface 82 may be formed as or may include, for example, one or more RF transmitters, one or more RF receivers, and/or one or more RF transceivers.

The hardware 80 of the WD 22 further includes processing circuitry 84. The processing circuitry 84 may include a processor 86 and memory 88. In particular, in addition to or instead of a processor, such as a central processing unit, and memory, the processing circuitry 84 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 86 may be configured to access (e.g., write to and/or read from) memory 88, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Thus, the WD 22 may further comprise software 90, which is stored in, for example, memory 88 at the WD 22, or stored in external memory (e.g., database, storage array, network storage device, etc.) accessible by the WD 22. The software 90 may be executable by the processing circuitry 84. The software 90 may include a client application 92. The client application 92 may be operable to provide a service to a human or non-human user via the WD 22, with the support of the host computer 24. In the host computer 24, an executing host application 50 may communicate with the executing client application 92 via the OTT connection 52 terminating at the WD 22 and the host computer 24. In providing the service to the user, the client application 92 may receive request data from the host application 50 and provide user data in response to the request data. The OTT connection 52 may transfer both the request data and the user data. The client application 92 may interact with the user to generate the user data that it provides.

The processing circuitry 84 may be configured to control any of the methods and/or processes described herein and/or to cause such methods, and/or processes to be performed, e.g., by WD 22. The processor 86 corresponds to one or more processors 86 for performing WD 22 functions described herein. The WD 22 includes memory 88 that is configured to store data, programmatic software code and/or other information described herein. In some embodiments, the software 90 and/or the client application 92 may include instructions that, when executed by the processor 86 and/or processing circuitry 84, causes the processor 86 and/or processing circuitry 84 to perform the processes described herein with respect to WD 22. For example, the processing circuitry 84 of the wireless device 22 may include an OOO unit 34 configured to, when at least one physical downlink shared channel, PDSCH, is subject to semi-persistent scheduling, SPS, determine an out-of-order, OOO, condition that is independent of a relative timing of physical downlink control channel, PDCCH, signaling.

In some embodiments, the processing circuitry 84 of the wireless device 22 may include a codebook combiner 32 which is configured to concatenate first and second codebooks.

In some embodiments, the inner workings of the network node 16, WD 22, and host computer 24 may be as shown in FIG. 8 and independently, the surrounding network topology may be that of FIG. 9.

In FIG. 9, the OTT connection 52 has been drawn abstractly to illustrate the communication between the host computer 24 and the wireless device 22 via the network node 16, without explicit reference to any intermediary devices and the precise routing of messages via these devices. Network infrastructure may determine the routing, which it may be configured to hide from the WD 22 or from the service provider operating the host computer 24, or both. While the OTT connection 52 is active, the network infrastructure may further take decisions by which it dynamically changes the routing (e.g., on the basis of load balancing consideration or reconfiguration of the network).

The wireless connection 64 between the WD 22 and the network node 16 is in accordance with the teachings of the embodiments described throughout this disclosure. One or more of the various embodiments improve the performance of OTT services provided to the WD 22 using the OTT connection 52, in which the wireless connection 64 may form the last segment. More precisely, the teachings of some of these embodiments may improve the data rate, latency, and/or power consumption and thereby provide benefits such as reduced user waiting time, relaxed restriction on file size, better responsiveness, extended battery lifetime, etc.

In some embodiments, a measurement procedure may be provided for the purpose of monitoring data rate, latency and other factors on which the one or more embodiments improve. There may further be an optional network functionality for reconfiguring the OTT connection 52 between the host computer 24 and WD 22, in response to variations in the measurement results. The measurement procedure and/or the network functionality for reconfiguring the OTT connection 52 may be implemented in the software 48 of the host computer 24 or in the software 90 of the WD 22, or both. In embodiments, sensors (not shown) may be deployed in or in association with communication devices through which the OTT connection 52 passes; the sensors may participate in the measurement procedure by supplying values of the monitored quantities exemplified above, or supplying values of other physical quantities from which software 48, 90 may compute or estimate the monitored quantities. The reconfiguring of the OTT connection 52 may include message format, retransmission settings, preferred routing etc.; the reconfiguring need not affect the network node 16, and it may be unknown or imperceptible to the network node 16. Some such procedures and functionalities may be known and practiced in the art. In certain embodiments, measurements may involve proprietary WD signaling facilitating the host computer's 24 measurements of throughput, propagation times, latency and the like. In some embodiments, the measurements may be implemented in that the software 48, 90 causes messages to be transmitted, in particular empty or 'dummy' messages, using the OTT connection 52 while it monitors propagation times, errors etc.

Thus, in some embodiments, the host computer 24 includes processing circuitry 42 configured to provide user data and a communication interface 40 that is configured to forward the user data to a cellular network for transmission to the WD 22. In some embodiments, the cellular network also includes the network node 16 with a radio interface 62. In some embodiments, the network node 16 is configured to, and/or the network node's 16 processing circuitry 68 is configured to perform the functions and/or methods described herein for preparing/initiating/maintaining/supporting/ending a transmission to the WD 22, and/or preparing/terminating/maintaining/supporting/ending in receipt of a transmission from the WD 22.

In some embodiments, the host computer 24 includes processing circuitry 42 and a communication interface 40 that is configured to a communication interface 40 configured to receive user data originating from a transmission from a WD 22 to a network node 16. In some embodiments, the WD 22 is configured to, and/or comprises a radio interface 82 and/or processing circuitry 84 configured to perform the functions and/or methods described herein for preparing/initiating/maintaining/supporting/ending a transmission to the network node 16, and/or preparing/terminating/maintaining/supporting/ending in receipt of a transmission from the network node 16.

Although FIGS. 8 and 9 show various "units" such as OOO unit 34 and codebook combiner 32 as being within a respective processor, it is contemplated that these units may be implemented such that a portion of the unit is stored in a corresponding memory within the processing circuitry. In other words, the units may be implemented in hardware or in a combination of hardware and software within the processing circuitry.

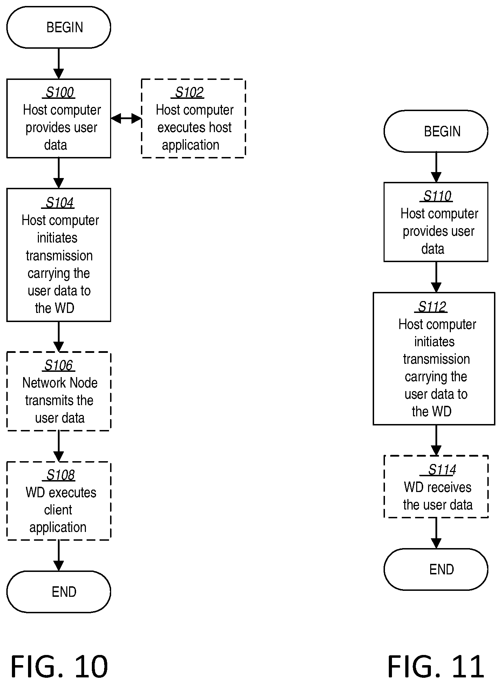

FIG. 10 is a flowchart illustrating an exemplary method implemented in a communication system, such as, for example, the communication system of FIGS. 8 and 9, in accordance with one embodiment. The communication system may include a host computer 24, a network node 16 and a WD 22, which may be those described with reference to FIG. 9. In a first step of the method, the host computer 24 provides user data (Block S100). In an optional substep of the first step, the host computer 24 provides the user data by executing a host application, such as, for example, the host application 50 (Block S102). In a second step, the host computer 24 initiates a transmission carrying the user data to the WD 22 (Block S104). In an optional third step, the network node 16 transmits to the WD 22 the user data which was carried in the transmission that the host computer 24 initiated, in accordance with the teachings of the embodiments described throughout this disclosure (Block S106). In an optional fourth step, the WD 22 executes a client application, such as, for example, the client application 92, associated with the host application 50 executed by the host computer 24 (Block S108).

FIG. 11 is a flowchart illustrating an exemplary method implemented in a communication system, such as, for example, the communication system of FIG. 8, in accordance with one embodiment. The communication system may include a host computer 24, a network node 16 and a WD 22, which may be those described with reference to FIGS. 8 and 9. In a first step of the method, the host computer 24 provides user data (Block S110). In an optional substep (not shown) the host computer 24 provides the user data by executing a host application, such as, for example, the host application 50. In a second step, the host computer 24 initiates a transmission carrying the user data to the WD 22 (Block S112). The transmission may pass via the network node 16, in accordance with the teachings of the embodiments described throughout this disclosure. In an optional third step, the WD 22 receives the user data carried in the transmission (Block S114).

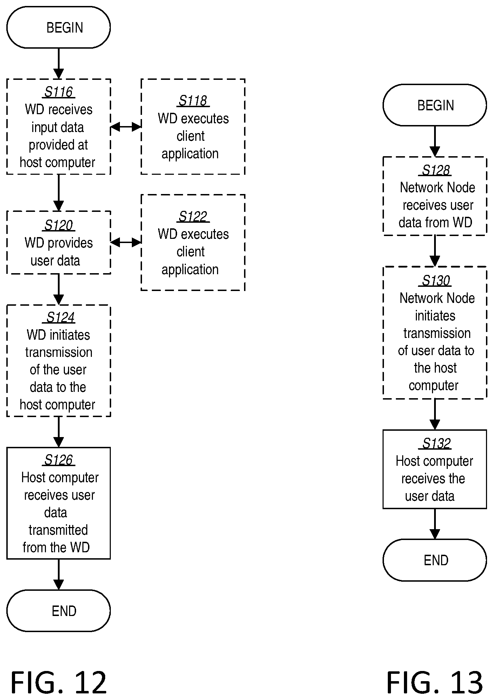

FIG. 12 is a flowchart illustrating an exemplary method implemented in a communication system, such as, for example, the communication system of FIG. 8, in accordance with one embodiment. The communication system may include a host computer 24, a network node 16 and a WD 22, which may be those described with reference to FIGS. 8 and 9. In an optional first step of the method, the WD 22 receives input data provided by the host computer 24 (Block S116). In an optional substep of the first step, the WD 22 executes the client application 92, which provides the user data in reaction to the received input data provided by the host computer 24 (Block S118). Additionally, or alternatively, in an optional second step, the WD 22 provides user data (Block S120). In an optional substep of the second step, the WD provides the user data by executing a client application, such as, for example, client application 92 (Block S122). In providing the user data, the executed client application 92 may further consider user input received from the user. Regardless of the specific manner in which the user data was provided, the WD 22 may initiate, in an optional third substep, transmission of the user data to the host computer 24 (Block S124). In a fourth step of the method, the host computer 24 receives the user data transmitted from the WD 22, in accordance with the teachings of the embodiments described throughout this disclosure (Block S126).

FIG. 13 is a flowchart illustrating an exemplary method implemented in a communication system, such as, for example, the communication system of FIG. 8, in accordance with one embodiment. The communication system may include a host computer 24, a network node 16 and a WD 22, which may be those described with reference to FIGS. 8 and 9. In an optional first step of the method, in accordance with the teachings of the embodiments described throughout this disclosure, the network node 16 receives user data from the WD 22 (Block S128). In an optional second step, the network node 16 initiates transmission of the received user data to the host computer 24 (Block S130). In a third step, the host computer 24 receives the user data carried in the transmission initiated by the network node 16 (Block S132).

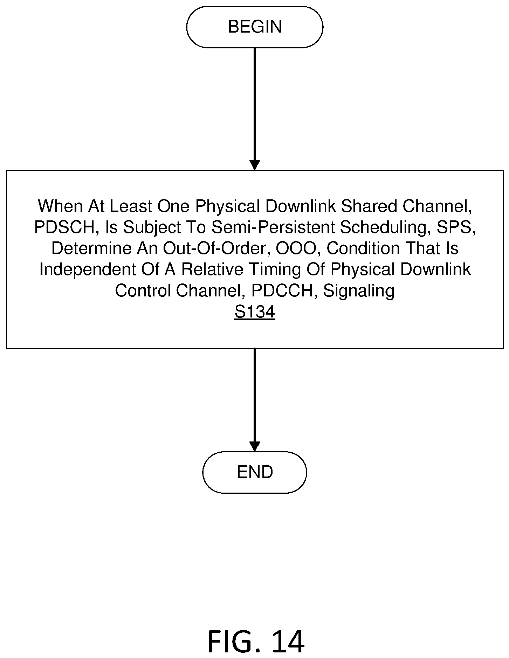

FIG. 14 is a flowchart of an exemplary process in a wireless device 22 according to some embodiments of the present disclosure. One or more blocks described herein may be performed by one or more elements of wireless device 22 such as by one or more of processing circuitry 84 (including the OOO unit 34), processor 86, radio interface 82 and/or communication interface 60. Wireless device 22 such as via processing circuitry 84 and/or processor 86 and/or radio interface 82 is configured to, when at least one physical downlink shared channel, PDSCH, is subject to semi-persistent scheduling, SPS, determine (Block S134) an out-of-order, OOO, condition that is independent of a relative timing of physical downlink control channel, PDCCH, signaling.

In some embodiments, the OOO condition is based at least in part on at least a PDSCH time domain resource allocation. In some embodiments, the OOO condition is based at least in part on an indication of a related hybrid automatic repeat request, HARQ, acknowledgement, ACK, timing. In some embodiments, the wireless device 22 such as via processing circuitry 84 and/or processor 86 and/or radio interface 82 is configured to when an OOO condition is detected, continue to process the at least one PDSCH being processed at a time of detection of the OOO condition. In some embodiments, the wireless device 22 such as via processing circuitry 84 and/or processor 86 and/or radio interface 82 is configured to when an OOO condition is detected as an overlap of at least two PDSCHs in time, prioritize the at least two PDSCHs.

In some embodiments, the wireless device 22 such as via processing circuitry 84 and/or processor 86 and/or radio interface 82 is configured to decode the PDSCH of the at least two PDSCHs having a higher priority; and determine to skip decoding the PDSCH of the at least two PDSCHs having a lower priority. In some embodiments, the wireless device 22 such as via processing circuitry 84 and/or processor 86 and/or radio interface 82 is configured to when an OOO condition is detected as an overlap of at least two PDSCHs in time, determine the PDSCH of the at least two PDSCHs to decode and the PDSCH of the at least two PDSCH to skip decoding based at least in part on at least one of: a hybrid automatic repeat request, HARQ, acknowledgement, ACK, timing indicator, a relative timing between the at least two PDSCHs and a quality of service for each logical channel associated with the respective PDSCH.

In some embodiments, the wireless device 22 such as via processing circuitry 84 and/or processor 86 and/or radio interface 82 is configured to determine the OOO condition by being configured to cause the WD 22 to determine the OOO condition using a timing of a hypothetical downlink control information, DCI. In some embodiments, the wireless device 22 such as via processing circuitry 84 and/or processor 86 and/or radio interface 82 is configured to indicate a maximum number of parallel PDSCH receptions on a same orthogonal.

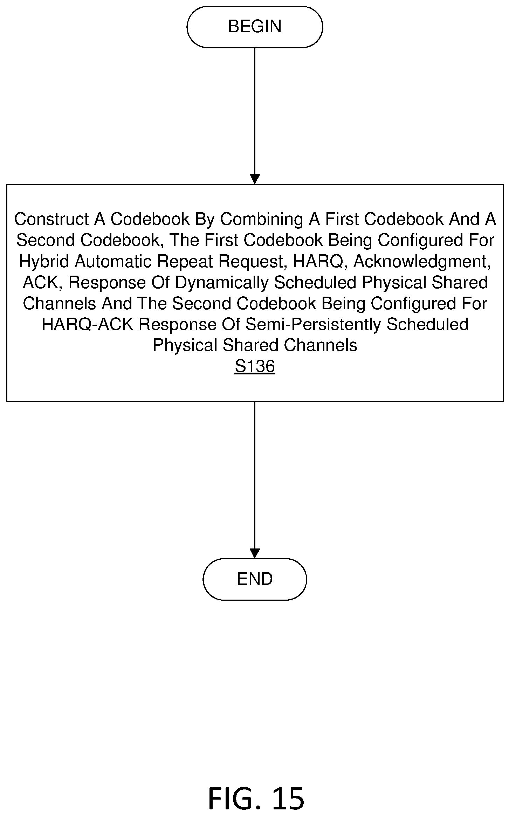

FIG. 15 is a flowchart of an exemplary process in a wireless device 22 according to some embodiments of the present disclosure. One or more blocks described herein may be performed by one or more elements of wireless device 22 such as by one or more of processing circuitry 84 (including the codebook combiner 32), processor 86, radio interface 82 and/or communication interface 60. Wireless device 22, such as via processing circuitry 84 and/or processor 86 and/or radio interface 82, is configured to construct (Block S136) a codebook by combining a first codebook and a second codebook, the first codebook being configured for hybrid automatic repeat request, HARQ, acknowledgment, ACK response of dynamically scheduled physical shared channels and the second codebook being configured for HARQ-ACK response of semi-persistently scheduled physical shared channels.

In some embodiments, the physical shared channels are physical downlink shared channels, PDSCHs. In some embodiments, an order of the first and second codebooks is not in a same order as an order of the corresponding physical shared channels. In some embodiments, the wireless device 22, such as via processing circuitry 84 and/or processor 86 and/or radio interface 82, is configured to combine the first codebook and the second codebook by being configured to cause the wireless device 22 to concatenate the first codebook and the second codebook to include the first codebook as following the second codebook. In some embodiments, independent HARQ codebooks are allocated to the wireless device for a plurality of SPS configurations. In some embodiments, a combined HARQ codebook is allocated for a plurality of SPS configurations.

In some embodiments, the wireless device 22, such as via processing circuitry 84 and/or processor 86 and/or radio interface 82, is configured to combine the first codebook and the second codebook by being configured to cause the wireless device 22 to combine the first codebook and the second codebook based at least in part on a condition. In some embodiments, the condition includes at least one of an SPS periodicity, a transport block reliability and a HARQ ACK timing associated with the physical shared channels. In some embodiments, the wireless device 22, such as via processing circuitry 84 and/or processor 86 and/or radio interface 82, is configured to combine the first codebook and the second codebook by being configured to cause the wireless device 22 to combine the first codebook and the second codebook in a predetermined order.

In some embodiments, the wireless device 22, such as via processing circuitry 84 and/or processor 86 and/or radio interface 82, is configured to cause the wireless device 22 to receive a timing field indicating multiple HARQ timing values, each HARQ timing value pointing to an ACK field for a physical shared channel. In some embodiments, the timing field further indicates whether ACK bits for multiple physical shared channels are bundled.

Having described the general process flow of arrangements of the disclosure and having provided examples of hardware and software arrangements for implementing the processes and functions of the disclosure, the sections below provide details and examples of arrangements for methods and apparatuses involving semipersistent scheduling (SPS), such as out of order operation (OOO) and hybrid automatic repeat request (HARQ) codebook design.

### OOO Operation

A description of an example modified rule that may be used instead of or in addition to the above-described legacy rule follows.

Example Modified Rule: For a method of detection of OOO operation, where a WD 22 is scheduled with two or more physical downlink shared channels, if at least one of the physical downlink shared channels is subject to semi-persistent scheduling, then determining an OOO condition should not take into account the relative timing of physical downlink control channel signaling.
- This may mean that the WD 22 only considers OOO between receiving PDSCHs (or respective hybrid automatic repeat request (HARQs)) independent of a relative timing, meaning, without considering the DCI/RRC signaling arrival time (or ending symbol as received by the WD 22) corresponding to the assigned PDSCH resources.
- In some embodiments, instead, the occurrence of an OOO condition may be based on PDSCH time-domain resource allocation. In some embodiments, the occurrence of an OOO condition may be further based on the indication of the related HARQ-ACK timing.
- In one example, the related HARQ-ACK timing is the K1 value, where K1 is contained in DCI for dynamically scheduled PDSCH, and K1 is provided by RRC signaling for downlink (DL SPS) scheduled PDSCH.

Note that the modified rule is different from the legacy rule (condition 1) where an OOO condition depends on relative timing of downlink control channel signals. As mentioned above, under the legacy rule an OOO condition may occur when both DCIs of the two PDSCHs end at the same time or the PDSCHs are not in order with respect to the order of the scheduling DCIs.

In some embodiments, the modified rule herein may be used in one or more of the following cases:
- can be considered if all PDSCHs (e.g., having at least partially overlapping in time HARQ processes) are subject to SPS (periodic PDSCH resources are assigned to the WD 22);
- can be considered if at least one or more PDSCHs (e.g., having at least partially overlapping in time HARQ processes) are subject to SPS, and some others are subject to dynamic allocation; and/or
- may or may not be considered if all PDSCHs (e.g., having at least partially overlapping in time HARQ processes) are subject to dynamic allocation.

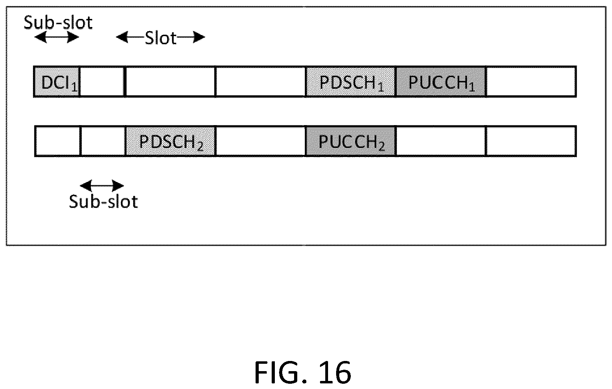

In one variant of the above example method of detection of OOO operation, a hypothetical PDCCH DCI may be assumed for each recurring PDSCH subject to SPS. The recurring PDSCH(s) are the PDSCH(s) resources periodically recurring according to the SPS periodicity, i.e., this may exclude the first activated PDSCH. With this hypothetical PDCCH DCI per periodic PDSCH, the condition on determining an OOO condition in Release 15 may be re-used. See, FIG. 16, where PDSCH1 is dynamically allocated by DCI1 and PDSCH2 is a part of SPS assignment. For PDSCH2, a hypothetical DCI can be assumed and may be used to determine whether an OOO condition exists.

In some embodiments, the ending symbol of the hypothetical DCI is X symbols from the starting symbol of the PDSCH (hypothetically scheduled by the hypothetical DCI, yet actually SPS). In some embodiments, the number X is a fixed value, or configured by RRC, or equal to the ending symbol of the activation DCI to the first symbol of the first activated SPS PDSCH.

Note, by SPS, it is meant that there is one DCI/RRC for multiple, periodically recurring, PDSCH resource allocations; and by dynamic allocation, it can be inferred that there is one DCI for a one-time PDSCH allocation. Further, if there is a retransmission of PDSCH which is subject to SPS, then the retransmission of the PDSCH is typically scheduled via dynamic allocation.

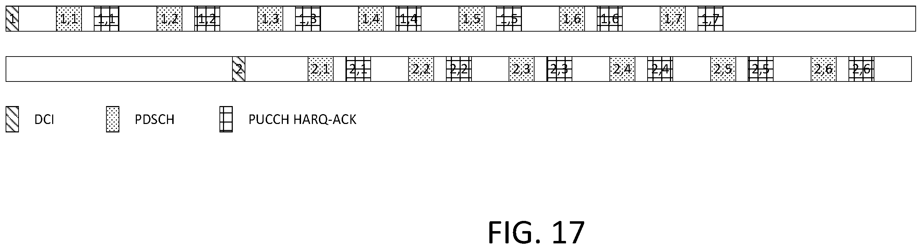

Hence, the WD 22's implementations and applications for dealing with OOO situations may change (as compared to existing arrangements) if the modified rule is implemented instead of the legacy rule. For example, with existing arrangements, for the HARQ process scenarios including SPS, the in-order transmission may be considered based on respective PDSCH timings (e.g., *K*₁). With this, the invalidity of transmissions in the scenarios depicted in e.g., FIGS. 2 and 3d may never exist, and therefore such scenarios originating due to SPS(s) would be treated as normal, i.e., treated as in-order transmission. Also, as shown in FIG. 17, illustrating an example scenario with two SPSs, SPS1 and SPS2, if the modified rule is not considered, then PDSCHs (PDSCH_{2,1} to PDSCH_{2,4}) related to DC1₂ are considered OOO (due to overlap of HARQ-ACK for SPS2 with PDSCH of SPS1) and PDSCH_{2,5} and PDSCH_{2,6} are not considered as OOO.

However, in some embodiments, with the WD 22 using the modified rule, all PDSCHs of DC1₂ may be determined as in-order (or not OOO). In other words, in some embodiments, for SPS operation where the PDSCH resources for SPS1 and SPS2 can have different starting points (PDSCH_{1,1} for SPS1 and PDSCH_{2,1} for SPS2) and different periodicities, then, as time progresses there may be instances of PDSCH transmissions where the legacy rule indicates that an OOO condition exists and instances of PDSCH transmissions where the legacy rule indicates that the OOO condition does not exist. As such, a change to the legacy rule, as proposed in the present disclosure, regarding what constitutes an OOO condition may be introduced for SPS operation.

Some embodiments of the WD 22 using the modified OOO detection rule, in the following detection scenarios, where OOO operation may occur, are presented:
- A. Data (PDSCH or PUSCH) transmissions overlap: If data transmissions, e.g., PDSCH(s) in DL or PUSCH(s) in UL overlap partially or fully, then the operation may be deemed to be an OOO operation e.g., using the legacy rule. Hence, because of the modified rule, DCI/RRC signaling time may become irrelevant, and the situation like FIG. 3d may not be determined/detected as OOO. The same may be the case for the uplink (UL).
- B. HARQ feedbacks that are not in order with respect to data (PDSCH or PUSCH) transmissions: If the HARQ feedbacks are not in order, e.g., in DL, the PUCCH HARQ-ACKs are not in-order with respect to the PDSCHs; or in UL, PDCCH HARQ-ACKs are not in-order with respect to PUSCHs, then these scenarios can be referred to as OOO HARQ operations e.g., using the legacy rule. Hence, because of the modified rule, DCI/RRC signaling time may become irrelevant. Therefore, OOO occurrence due to DCIs/RRC timings may not be considered and therefore, a situation like FIGS. 2 and 3d may not be determined/detected as OOO. The same may be the case for the UL.
- C. Combination of A and B.

In some embodiments, the principles set forth herein may apply to the UL as well as the DL. In the UL, for example, for dynamic grant there is DCI (scheduling PUSCH and/or the related HARQ-ACK) followed by the scheduled physical uplink shared channel (PUSCH), followed by the downlink HARQ-ACK. For UL configured grant (similar to DL SPS, but in the UL) there is DCI activation of the configured grant followed by the activated recurring, periodic PUSCHs.

In one embodiment, a WD 22 is capable of handling a maximum of Y parallel PDSCH receptions on a same symbol per one bandwidth part (BWP). Here, Y may be indicated by the WD 22 in e.g., a WD capability indication. The candidate PDSCH reception(s) on a symbol per BWP may be determined based on one or more of:
If PDSCH is configured by SPS: then SPS transmission occasions of slot and time domain resource allocation (TDRA);
- If dynamic PDSCH then: DCI indication of slot and TDRA;
   If there is overlapped resource allocation on frequency domain then: priority information; and
- WD capability indication;
   i) For maximum Y parallel PDSCH reception per one BWP or component carrier; and
   ii) WD PDSCH processing timeline.

In some embodiments, a WD 22 with a single processing chain may be designed to process the PDSCHs with so-called "perfect" processing pipelining at the WD 22. The perfect pipelining means that one processing block is used for processing of one channel at a time, while it is guaranteed that all transmission on that channel can meet their timeline. When the WD 22 reception of two PDSCHs do not allow pipelining, the WD 22 may not be able to process two PDSCHs and generate the HARQ-ACK bits according to the decoding outcome, in some embodiments. For WD 22s that are not capable of processing two colliding PDSCHs, the following may be applicable:
If two colliding PDSCH of DL-SPS have different priority, the WD 22 may process the DL SPS PDSCH with higher priority, and skip decoding of the DL SPS PDSCH with lower priority.

Alternatively, the WD 22 medium access control (MAC) entity may consider multiple activated downlink assignments with overlapping PDSCH durations in combination, so that the N-th assignment of the lower priority with overlapping PDSCH duration of a M-th assignment of a higher priority is not used by or part of the resulting combined SPS configuration.

If two colliding PDSCH of DL-SPS have the same priority, the WD 22 may use one or more of the following options:
- Option 1: the WD 22 processes the PDSCH with tighter K1 (e.g., K1 closer in time to its corresponding PDSCH);
- Option 2: the WD 22 processes the earlier PDSCH, and drops the later PDSCH;
- Option 3: the WD 22 processes the later PDSCH, and drops the earlier PDSCH; and/or
- Option 4: the WD 22 processes a PDSCH depending on each Logical Channel's relative quality-of-service (QoS) fulfillment, e.g., prioritized bit rate (PBR), if associated with those Radio Bearers.

In some embodiments, deterministic dropping of conflicting PDSCHs may be performed by the WD 22, since the network node 16 (e.g., gNB) may not need to transmit the dropped PDSCH at all, knowing that the WD 22 would skip decoding it.

In some embodiments, for PDSCH of DL-SPS, the priority level of the given DL SPS configuration can be provided, for example, in one of the following ways:
The priority level of a DL SPS configuration is indicated in its RRC configuration; or
The priority level of a DL SPS configuration is indicated in its activation DCI.

In some embodiments, when a WD 22 skips decoding of a DL SPS PDSCH, the WD 22 may still generate a HARQ-ACK response for the DL SPS PDSCH in the UL response. The HARQ-ACK response may be one or more of:
- If a code block group (CBG) is not configured, the HARQ-ACK is composed of M bits of non-acknowledgement (NACK), where M is the number of transport blocks (TBs) configured for the DL SPS PDSCH; and
- If the code block group (CBG) is configured, the HARQ-ACK is composed of M times G bits of NACK, where G is the number of code block groups configured for one TB of the DL SPS PDSCH.

Some embodiments may be applied to ongoing PDSCHs in several dimensions. For example, the embodiments may be applied to one or more of:
- PDSCHs in one or more active BWP, and/or
- PDSCHs in one or more component carriers, and/or
- PDSCHs associated with one or more transmit/receive points (TRPs).

One or more of the embodiments above may be applied to all ongoing PDSCH. Alternatively, one or more of the embodiments may be applied to a subset of possible PDSCH, but other PDSCHs may be processed separately. This may happen if the WD 22 has multiple processing chains.

In some embodiments, the modified rule discussed herein may be extended in the UL direction where allocation is based on dynamic grant and CG (likewise SPS in DL).

Thus, according to one aspect, a WD 22 includes processing circuitry 84 configured to, when at least one PDSCH, is subject to SPS, determine an OOO condition that is independent of a relative timing of PDCCH signaling, the OOO condition being one of data transmission overlap and out-of-order hybrid automatic repeat request, HARQ, feedback. According to this aspect, in some embodiments, the OOO condition is based on at least a PDSCH time domain resource allocation. In some embodiments, the OOO condition is further based on an indication of a related hybrid automatic repeat request acknowledgement. In some embodiments, if an OOO condition is detected, the processing circuitry is configured to continue to process a PDSCH being processed at a time of detection of the OOO condition. In some embodiments, if an OOO condition is detected as an overlap of PDSCH in time, the processing circuitry is configured to prioritize the PDSCHs.

### HARQ Codebook Design

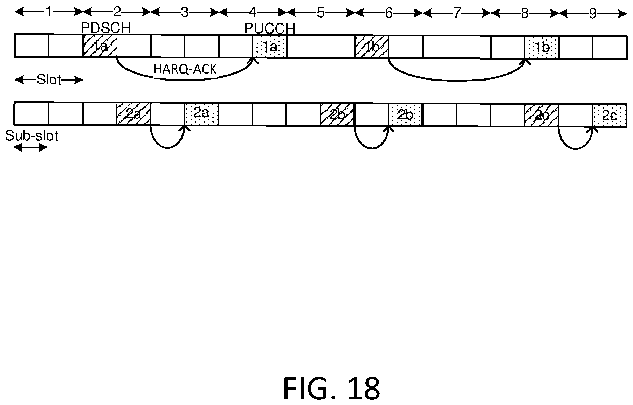

In a first embodiment, SPS configuration HARQ codebooks not combined with dynamic PDSCH codebook, then multiple options may arise. According to one option of this embodiment, all SPS configurations have separate independent codebooks. See, for example, FIG. 18, where the upper row represents a first SPS configuration and the second row represents a second SPS configuration. In another option of this embodiment, all SPS configurations have a combined codebook. According to another option of this embodiment, some SPS configurations have a combined codebook and some SPS configurations have independent codebooks.

In a second embodiment, an SPS configuration codebook may be attached with a dynamic PDSCH codebook.

Depending on applicability, the combination (which may be, for example, a concatenation) of codebooks in these two embodiments, may be based on some condition, e.g., SPSs having a same periodicity, or transport blocks (TBs) from SPSs and/or dynamic allocations having a same reliability, or same K1 timing, etc.

In the combined codebook, bundle feedback can be transmitted (i.e., the resultant bit from an AND operation on HARQ-ACK bits belonging to two different HARQ operations/PDSCHs/TBs or more). The following scenarios may exist:
- Bundle N/ACK for TBs belonging to multiple SPSs;
- Bundle N/ACK for TBs belonging to multiple dynamic PDSCHs; and
- Bundle N/ACK for TBs belonging to multiple SPSs and dynamic PDSCHs.

### Additional Properties

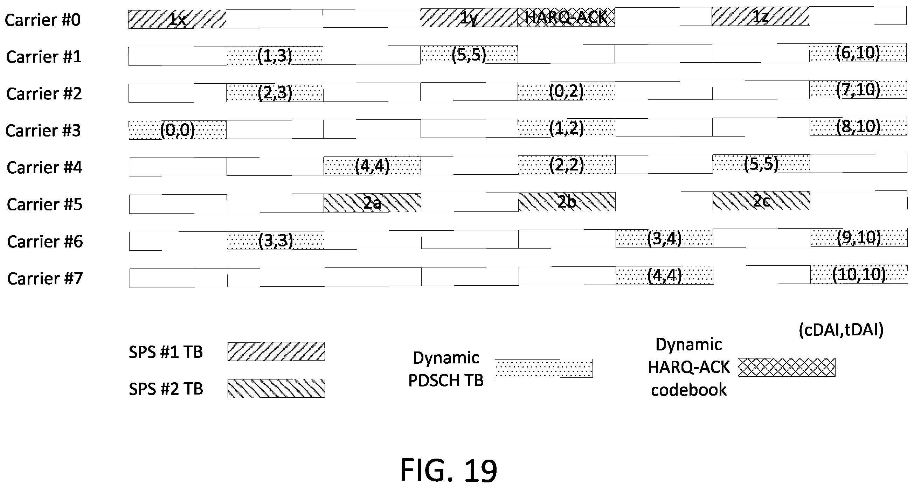

1. Concatenation: For a Type 2 HARQ-ACK codebook (i.e., a dynamic codebook), two codebooks may be constructed. The first codebook is for the HARQ-ACK response of dynamically scheduled PDSCH, each of which have an associated PDCCH. The second codebook is for HARQ-ACK response for PDSCH of the SPS configurations.
   The two HARQ-ACK codebooks may be concatenated in, for example, two ways:
   - The codebook for dynamic PDSCH may be put in front of the codebook for DL SPS. This is consistent with 3GPP Rel-15.
   - The codebook for dynamic PDSCH (i.e., the first codebook) may be put behind the codebook for DL SPS (i.e., the second codebook). This may provide a benefit in which the size of the second codebook is deterministic, and therefore, there is no concern about HARQ-ACK bit misalignment, which may happen due to misdetection of PDCCH.
2. DAI: Since time-domain resource allocation of DL SPS may be known, there may be no concern of mis-aligned HARQ-ACK bits. There may be no need of DAI, either counter downlink assignment indicator (cDAI) or total DAI (tDAI). The second HARQ-ACK codebook may hence be composed of an ACK/NACK response for each of related DL SPS configurations, where the ACK/NACK response is for either DL SPS PDSCH reception or SPS PDSCH release.
3. Generalized Codebook Construction: Different SPS may arrive at any time. For a dynamic codebook, including both dynamic PDSCH and SPS, and assuming no downlink assignment index (DAI) for SPS, the WD 22 may supply ACK information in a number of ways. In FIG. 19, an example is presented where transport blocks (TBs) belonging to different SPS and dynamic PDSCHs are allocated, and in the dynamic codebook construction:
   a) In some embodiments, SPS HARQ-ACKs may be in front e.g., of the HARQ-ACKs for dynamic PDSCHs (in other words, HARQ-ACKs bits for the dynamic PDSCHs may follow the SPS HARQ-ACK bits in a codebook):
      i) Referring to the example of FIG. 19, the ACKs in HARQ-ACK field represented as *HARQ* - *ACK* = {1*x*, 2*a*, 1*y*, 0,1,2,3,4,5}, where 1x, 2a and 1y are the SPS HARQ-ACKs and 0, 1, 2, 3, 4 and 5 are the dynamic PDSCH HARQ-ACKs;
   b) In some embodiments, SPS HARQ-ACKs may be in the back e.g., of the HARQ-ACKS for dynamic PDSCHs (in other words, SPS HARQ-ACK bits may follow the HARQ-ACK bits for the dynamic PDSCHs in a codebook):
      i) Referring to the example of FIG. 19, the ACKs in HARQ-ACK field represented as *HARQ - ACK* = {0,1,2,3,4,5,1x, 2*a*, 1*y*};
   c) In some embodiments, SPS HARQ-ACK may follow the order of corresponding SPS PDSCH's carrier (first) and time (second) allocation:
      i) Referring to the example of FIG. 19, the ACKs in HARQ-ACK field represented as *HARQ - ACK* = {1*x*, 0,1,2,3,4,2*a*, 1*y*, 5}.
4. HARQ Timing: In some embodiments, there may be a timing field (offset) for an uplink (UL) acknowledgement in the downlink control information (DCI) for dynamic PDSCH allocation. In some embodiments, for SPS, there may be more than one timing values in activation DCI or RRC. There are at least two scenarios, e.g., where:
   a) One HARQ timing value points to an ACK field for one PDSCH; and
   b) Multiple HARQ timing values point to an ACK field for many PDSCHs, e.g., see FIG. 20; and, in some embodiments, further:
      (1) ACK bits are bundled; or
      (2) ACK bits are not bundled.

The timing offset may be measured in terms of e.g., slots, or mini-slots, or time symbols.

Referring again to FIG. 18, allocations of PDSCHs and HARQ-ACK responses for two different SPS configurations are shown, the top row having PDSCH 1 and 4 (using PDSCH numbering to indicate an order in time, e.g., PDSCH 1 occurring 1st in time and PDSCH 4 occurring 4^{th} in time relative to all the PDSCHs shown), and each PDSCH having its corresponding HARQ ACK response in a PUCCH for a first SPS (SPS 1) configuration. The bottom row has assignments for another SPS (SPS 2) configuration.

5. OOO Condition: In some embodiments, while allocating these codebook resources, the order of codebook allocation may or may not follow the order (e.g., order in time) of the PDSCH allocations. An example is shown in FIG. 21. FIG. 21 shows that HARQ (on PUCCH) for PDSCH 2 is out of order (OOO) (as it comes earlier than HARQ/PUCCH of PDSCH 1). PDSCH 1 and PDSCH 4 are part of SPS 1, and PDSCH 2, PDSCH 3 and PDSCH 5 are part of SPS2. According to a legacy rule of 3GPP Rel-15, this is not permitted, and such allocation may be deemed erroneous. Further, only one SPS is allowed in 3GPP Rel-15. However, for future releases of 3GPP standards, using a modified rule according to the arrangements in the present disclosure, there may be no such limitation due to an OOO condition. Therefore, in some embodiments of the present disclosure, the ACK 1 bit (e.g., for acknowledging PDSCH 1) can be transmitted in a physical uplink control channel (PUCCH 1), and the ACK 2 bit (e.g., for acknowledging PDSCH 2) can be transmitted in PUCCH 2 (e.g., which would be considered an OOO resource using the legacy rule). It is noted that the PUCCH resources in FIG. 21 may be part of different SPSs or dynamic allocation or both.

The above discussion may be extended for codebook allocation in the UL where there may be dynamic PUSCH (like dynamic PDSCH in DL), and CG (similar to SPS in DL) with allowable HARQ transmission from a network node 16 (e.g., gNB). Note that in 3GPP Rel-15, CG does not support HARQ transmission.

According to one aspect, a WD 22 is configured to communicate with a network node and includes processing circuitry 84 configured to construct a codebook by combining a first codebook and a second codebook , the first codebook being configured for hybrid automatic repeat request, HARQ, acknowledgment, ACK, response of dynamically scheduled physical shared channels and the second codebook being configured for HARQ-ACK response of semi-persistently scheduled physical shared channels.

According to this aspect, in some embodiments, the physical shared channels are physical downlink shared channels, PDSCH. In some embodiments, an order of the first and second codebooks is not in the same order as an order of physical shared channels. In some embodiments, the first codebook follows the second codebook. In some embodiments, a plurality of SPS configurations have independent codebooks. In some embodiments, a plurality of SPS configurations have independent codebooks. In some embodiments, the combining of codebooks is based on a condition, the condition including at least one of SPS periodicity, transport block reliability and K1 timing. In some embodiments, SPS configuration HARQ codebooks are allocated separately. In some embodiments, SPS configurations have separate independent codebooks. In some embodiments, all SPS configuration have a combined codebook. In some embodiments, forming the combined codebook is based on a condition. In some embodiments, an SPS configuration codebook is attached by a dynamic physical downlink shared channel, PDSCH, codebook. In some embodiments, the combining of the first and second codebooks is in a predetermined order. In some embodiments, the radio interface and/or processing circuitry is further configured to receive a timing field indicating multiple HARQ timing values, each HARQ timing value pointing to an ACK field of physical shared channel. In some embodiments, the timing field further indicates whether ACK bits are bundled.

According to another aspect, a method implemented in a WD 22 includes constructing a codebook by combining a first codebook and a second codebook , the first codebook being configured for hybrid automatic repeat request, HARQ, acknowledgment, ACK, response of dynamically scheduled physical shared channels and the second codebook being configured for HARQ-ACK response of semi-persistently scheduled physical shared channels.

According to this aspect, in some embodiments, the physical shared channels are physical downlink shared channels, PDSCH. In some embodiments, an order of the first and second codebooks is not in the same order as an order of physical shared channels. In some embodiments, the first codebook follows the second codebook. In some embodiments, a plurality of SPS configurations have independent codebooks. In some embodiments, a plurality of SPS configurations have a combined codebook. In some embodiments, the combining of codebooks is based on a condition, the condition including at least one of SPS periodicity, transport block reliability and K1 timing. In some embodiments, SPS configuration HARQ codebooks are allocated separately. In some embodiments, SPS configurations have separate independent codebooks. In some embodiments, all SPS configuration have a combined codebook. In some embodiments, forming the combined codebook is based on a condition. In some embodiments, an SPS configuration codebook is attached by a dynamic physical downlink shared channel, PDSCH, codebook. In some embodiments, the combining of the first and second codebooks is in a predetermined order. In some embodiments, the process further includes receiving a timing field indicating multiple HARQ timing values, each HARQ timing value pointing to an ACK field of physical shared channel. In some embodiments, the timing field further indicates whether ACK bits are bundled.

As will be appreciated by one of skill in the art, the concepts described herein may be embodied as a method, data processing system, computer program product and/or computer storage media storing an executable computer program. Accordingly, the concepts described herein may take the form of an entirely hardware embodiment, an entirely software embodiment or an embodiment combining software and hardware aspects all generally referred to herein as a "circuit" or "module." Any process, step, action and/or functionality described herein may be performed by, and/or associated to, a corresponding module, which may be implemented in software and/or firmware and/or hardware. Furthermore, the disclosure may take the form of a computer program product on a tangible computer usable storage medium having computer program code embodied in the medium that can be executed by a computer. Any suitable tangible computer readable medium may be utilized including hard disks, CD-ROMs, electronic storage devices, optical storage devices, or magnetic storage devices.

Some embodiments are described herein with reference to flowchart illustrations and/or block diagrams of methods, systems and computer program products. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer (to thereby create a special purpose computer), special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable memory or storage medium that can direct a computer or other programmable data processing apparatus to function in a particular manner, such that the instructions stored in the computer readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

It is to be understood that the functions/acts noted in the blocks may occur out of the order noted in the operational illustrations. For example, two blocks shown in succession may in fact be executed substantially concurrently or the blocks may sometimes be executed in the reverse order, depending upon the functionality/acts involved. Although some of the diagrams include arrows on communication paths to show a primary direction of communication, it is to be understood that communication may occur in the opposite direction to the depicted arrows.

Computer program code for carrying out operations of the concepts described herein may be written in an object oriented programming language such as Java^{®} or C++. However, the computer program code for carrying out operations of the disclosure may also be written in conventional procedural programming languages, such as the "C" programming language. The program code may execute entirely on the user's computer, partly on the user's computer, as a stand-alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).

Many different embodiments have been disclosed herein, in connection with the above description and the drawings. It will be understood that it would be unduly repetitious and obfuscating to literally describe and illustrate every combination and subcombination of these embodiments. Accordingly, all embodiments can be combined in any way and/or combination, and the present specification, including the drawings, shall be construed to constitute a complete written description of all combinations and subcombinations of the embodiments described herein, and of the manner and process of making and using them, and shall support claims to any such combination or subcombination.

Abbreviations that may be used in the preceding description include:

| Abbreviation | Explanation |
|---|---|
| 3GPP | 3rd Generation Partnership Project |
| 5G | 5th Generation |
| ACK | Acknowledgement |
| CE | Control Element |
| CG | Configured Grant |
| DCI | Downlink Control Information |
| DL | Downlink |
| DMRS | Demodulation Reference Signal |
| GF | Grant-Free |
| gNB | Next Generation NodeB |
| ID | Identity |
| LCH | Logical Channel |
| LTE | Long-Term Evolution |
| MCS | Modulation and Coding Scheme |
| NACK | No Acknowledgement |
| NR | New Radio |
| OOO | Out-of-Order |
| PUSCH | Physical Uplink Shared Channel |
| SNR | Signal-to-Noise Ratio |
| SPS | Semi-Persistent Scheduling |
| TRP | Transmit-Receive Point |
| TTI | Transmission Time Interval |
| TO | Transmission Opportunity |
| UE | User Equipment |
| UL | Uplink |
| URLLC | Ultra-Reliable and Low-Latency Communications |

It will be appreciated by persons skilled in the art that the embodiments described herein are not limited to what has been particularly shown and described herein above. In addition, unless mention was made above to the contrary, it should be noted that all of the accompanying drawings are not to scale. A variety of modifications and variations are possible in light of the above teachings without departing from the scope of the following claims.

## Claims

1. A wireless device (22), WD, configured to communicate with a network node, the WD (22) comprising processing circuitry (84), the processing circuitry (84) configured to:
when at least one physical downlink shared channel, PDSCH, is subject to semi-persistent scheduling, SPS, determine an out-of-order, OOO, condition that is independent of a relative timing of a physical downlink control channel, PDCCH, signaling, wherein the relative timing of the PDCCH is an arrival time of signaling corresponding to assigned resources of the PDSCH, **characterized in that**
when an OOO condition is detected as an overlap of at least two PDSCHs in time, determine the PDSCH of the at least two PDSCHs to decode and the PDSCH of the at least two PDSCH to skip decoding based at least in part on at least one of: a hybrid automatic repeat request, HARQ, acknowledgement, ACK, timing indicator, a relative timing between the at least two PDSCHs and a quality of service for each logical channel associated with the respective PDSCH.

2. The WD (22) of Claim 1, wherein the OOO condition is based at least in part on at least a PDSCH time domain resource allocation.

3. The WD (22) of any one of Claims 1 and 2, wherein the OOO condition is based at least in part on an indication of a related hybrid automatic repeat request, HARQ, acknowledgement, ACK, timing.

4. The WD (22) of any one of Claims 1-3, wherein the processing circuitry (84) is configured to:
when an OOO condition is detected, continue to process the at least one PDSCH being processed at a time of detection of the OOO condition.

5. The WD (22) of any one of Claims 1-3, wherein the processing circuitry (84) is configured to:
when an OOO condition is detected as an overlap of at least two PDSCHs in time, prioritize the at least two PDSCHs.

6. The WD (22) of Claim 5, wherein the processing circuitry (84) is further configured to:
decode the PDSCH of the at least two PDSCHs having a higher priority; and
determine to skip decoding the PDSCH of the at least two PDSCHs having a lower priority.

7. The WD (22) of any one of Claims 1-6, wherein the processing circuitry (84) is configured to determine the OOO condition by being configured to cause the WD (22) to:
determine the OOO condition using a timing of a hypothetical downlink control information, DCI.

8. The WD (22) of any one of Claims 1-7, wherein the processing circuitry (84) is further configured to cause the WD (22) to:
indicate a maximum number of parallel PDSCH receptions on a same orthogonal frequency division multiplexing, OFDM, symbol per bandwidth part that the WD (22) is capable of.

9. A method implemented in a wireless device (22), WD, configured to communicate with a network node, the method comprising:
when (S134) at least one physical downlink shared channel, PDSCH, is subject to semi-persistent scheduling, SPS, determining an out-of-order, OOO, condition that is independent of a relative timing of a physical downlink control channel, PDCCH, signaling, wherein the relative timing of the PDCCH is an arrival time of signaling corresponding to assigned resources of the PDSCH, **characterized in that**
when an OOO condition is detected as an overlap of at least two PDSCHs in time, determining the PDSCH of the at least two PDSCHs to decode and the PDSCH of the at least two PDSCH to skip decoding based at least in part on at least one of: a hybrid automatic repeat request, HARQ, acknowledgement, ACK, timing indicator, a relative timing between the at least two PDSCHs and a quality of service for each logical channel associated with the respective PDSCH.

10. The method of Claim 9, further comprising:
when an OOO condition is detected, continuing to process the at least one PDSCH being processed at a time of detection of the OOO condition.

11. The method of Claim 9, further comprising:
when an OOO condition is detected as an overlap of at least two PDSCHs in time, prioritizing the at least two PDSCHs.

12. The method of Claim 11, further comprising:
decoding the PDSCH of the at least two PDSCHs having a higher priority; and
determining to skip decoding the PDSCH of the at least two PDSCHs having a lower priority.

13. The method of any one of Claims 9-12, wherein determining the OOO condition further comprises:
determining the OOO condition using a timing of a hypothetical downlink control information, DCI.

## Patentansprüche

1. Drahtlose Vorrichtung, WD, (22), die zum Kommunizieren mit einem Netzwerkknoten konfiguriert ist, wobei die WD (22) Verarbeitungsschaltungsanordnung (84) umfasst, wobei die Verarbeitungsschaltungsanordnung (84) zu Folgendem konfiguriert ist:
wenn mindestens ein gemeinsamer physikalischer Downlink-Kanal, PDSCH, einer semipersistenten Planung, SPS, unterliegt, Bestimmen eines Out-of-Order-Zustands, OOO-Zustands, der von einer relativen Zeitsteuerung einer Signalisierung eines physikalischen Downlink-Steuerkanals, PDCCH, unabhängig ist, wobei die relative Zeitsteuerung des PDCCH eine Ankunftszeit von Signalisierung ist, die zugeordneten Ressourcen des PDSCH entspricht, **gekennzeichnet durch** Folgendes:
wenn ein OOO-Zustand als eine zeitliche Überlappung mindestens zweier PDSCHs erkannt wird, Bestimmen des PDSCH der mindestens zwei PDSCHs, der decodiert werden soll, und des PDSCH der mindestens zwei PDSCHs, bei dem die Decodierung übersprungen werden soll, zumindest teilweise basierend auf mindestens einem von Folgenden: einem Zeitsteuerungsindikator einer Bestätigung, ACK, einer hybriden automatischen Wiederholungsanforderung, HARQ, einer relativen Zeitsteuerung zwischen den mindestens zwei PDSCHs und einer Dienstqualität für jeden logischen Kanal, der mit dem jeweiligen PDSCH assoziiert ist.

2. WD (22) nach Anspruch 1, wobei der OOO-Zustand zumindest teilweise auf mindestens einer PDSCH-Zeitdomänenressourcenzuweisung basiert.

3. WD (22) nach einem der Ansprüche 1 und 2, wobei der OOO-Zustand zumindest teilweise auf eine Angabe einer zugehörigen Zeitsteuerung einer Bestätigung, ACK, einer hybriden automatischen Wiederholungsanforderung, HARQ, basiert.

4. WD (22) nach einem der Ansprüche 1-3, wobei die Verarbeitungsschaltungsanordnung (84) ferner zu Folgendem konfiguriert ist:
wenn ein OOO-Zustand erkannt wird, Fortfahren mit der Verarbeitung des mindestens einen PDSCH, der zum Zeitpunkt der Erkennung des OOO-Zustands verarbeitet wird.

5. WD (22) nach einem der Ansprüche 1-3, wobei die Verarbeitungsschaltungsanordnung (84) ferner zu Folgendem konfiguriert ist:
wenn ein OOO-Zustand als eine zeitliche Überlappung mindestens zweier PDSCHs erkannt wird, Priorisieren der mindestens zwei PDSCHs.

6. WD (22) nach Anspruch 5, wobei die Verarbeitungsschaltungsanordnung (84) ferner zu Folgendem konfiguriert ist:
Decodieren des PDSCH der mindestens zwei PDSCHs mit einer höheren Priorität;
Bestimmen, die Decodierung des PDSCH der mindestens zwei PDSCHs mit einer niedrigeren Priorität zu überspringen.

7. WD (22) nach einem der Ansprüche 1-6, wobei die Verarbeitungsschaltungsanordnung (84) ferner dazu konfiguriert ist, den OOO-Zustand zu erkennen, indem sie dazu konfiguriert ist, die WD (22) zu Folgendem zu veranlassen:
Bestimmen des OOO-Zustands unter Verwendung einer Zeitsteuerung einer hypothetischen Downlink-Steuerinformation, DCI.

8. WD (22) nach einem der Ansprüche 1-7, wobei die Verarbeitungsschaltungsanordnung (84) ferner dazu konfiguriert ist, die WD (22) zu Folgendem zu veranlassen:
Angeben einer maximalen Anzahl von parallelen PDSCH-Empfängen auf einem gleichen Symbol von orthogonalem Frequenzmultiplex, OFDM, pro Bandbreitenteil, zu der die WD (22) imstande ist.

9. Verfahren, das in einer drahtlosen Vorrichtung, WD, (22) implementiert wird, die zum Kommunizieren mit einem Netzwerkknoten konfiguriert ist, wobei das Verfahren Folgendes umfasst:
wenn (S134) mindestens ein gemeinsamer physikalischer Downlink-Kanal, PDSCH, einer semipersistenten Planung, SPS, unterliegt, Bestimmen eines Out-of-Order-Zustands, OOO-Zustands, der von einer relativen Zeitsteuerung einer Signalisierung eines physikalischen Downlink-Steuerkanals, PDCCH, unabhängig ist, wobei die relative Zeitsteuerung des PDCCH eine Ankunftszeit von Signalisierung ist, die zugeordneten Ressourcen des PDSCH entspricht, **gekennzeichnet durch** Folgendes:
wenn ein OOO-Zustand als eine zeitliche Überlappung mindestens zweier PDSCHs erkannt wird, Bestimmen des PDSCH der mindestens zwei PDSCHs, der decodiert werden soll, und des PDSCH der mindestens zwei PDSCHs, bei dem die Decodierung übersprungen werden soll, zumindest teilweise basierend auf mindestens einem von Folgenden: einem Zeitsteuerungsindikator einer Bestätigung, ACK, einer hybriden automatischen Wiederholungsanforderung, HARQ, einer relativen Zeitsteuerung zwischen den mindestens zwei PDSCHs und einer Dienstqualität für jeden logischen Kanal, der mit dem jeweiligen PDSCH assoziiert ist.

10. Verfahren nach Anspruch 9, ferner umfassend:
wenn ein OOO-Zustand erkannt wird, Fortfahren mit der Verarbeitung des mindestens einen PDSCH, der zum Zeitpunkt der Erkennung des OOO-Zustands verarbeitet wird.

11. Verfahren nach Anspruch 9, ferner umfassend:
wenn ein OOO-Zustand als eine zeitliche Überlappung mindestens zweier PDSCHs erkannt wird, Priorisieren der mindestens zwei PDSCHs.

12. Verfahren nach Anspruch 11, ferner umfassend:
Decodieren des PDSCH der mindestens zwei PDSCHs mit einer höheren Priorität; und
Bestimmen, die Decodierung des PDSCH der mindestens zwei PDSCHs mit einer niedrigeren Priorität zu überspringen.

13. Verfahren nach einem der Ansprüche 9-12, wobei das Bestimmen des OOO-Zustands ferner Folgendes umfasst:
Bestimmen des OOO-Zustands unter Verwendung einer Zeitsteuerung einer hypothetischen Downlink-Steuerinformation, DCI.

## Revendications

1. Dispositif sans fil (22), WD, configuré pour communiquer avec un nœud de réseau, le WD (22) comprenant une circuiterie de traitement (84), la circuiterie de traitement (84) étant configurée pour :
lorsqu'au moins un canal partagé de liaison descendante physique, PDSCH, est soumis à une planification semi-persistante, SPS, déterminer un état dans le désordre, OOO, qui est indépendant d'une temporisation relative d'une signalisation de canal de commande de liaison descendante physique, PDCCH, dans lequel la temporisation relative du PDCCH est un temps d'arrivée de signalisation correspondant à des ressources attribuées du PDSCH, **caractérisé en ce que**
lorsqu'un état 000 est détecté en tant que chevauchement d'au moins deux PDSCH dans le temps, déterminer le PDSCH parmi les au moins deux PDSCH à décoder et le PDSCH parmi les au moins deux PDSCH à ne pas décoder sur la base au moins en partie d'au moins l'un parmi : un indicateur de temporisation d'accusé de réception, ACK, de demande de répétition automatique hybride, HARQ, une temporisation relative entre les au moins deux PDSCH et une qualité de service pour chaque canal logique associé au PDSCH respectif.

2. WD (22) selon la revendication 1, dans lequel l'état OOO est basé au moins en partie sur au moins une attribution de ressources de domaine temporel de PDSCH.

3. WD (22) selon l'une quelconque des revendications 1 et 2, dans lequel l'état OOO est basé au moins en partie sur une indication d'une temporisation d'accusé de réception, ACK, de demande de répétition automatique hybride, HARQ, liée.

4. WD (22) selon l'une quelconque des revendications 1 à 3, dans lequel la circuiterie de traitement (84) est configurée pour :
lorsqu'un état OOO est détecté, continuer de traiter l'au moins un PDSCH en cours de traitement à un temps de détection de l'état OOO.

5. WD (22) selon l'une quelconque des revendications 1 à 3, dans lequel la circuiterie de traitement (84) est configurée pour :
lorsqu'un état 000 est détecté en tant que chevauchement d'au moins deux PDSCH dans le temps, prioriser les au moins deux PDSCH.

6. WD (22) selon la revendication 5, dans lequel la circuiterie de traitement (84) est en outre configurée pour :
décoder le PDSCH parmi les au moins deux PDSCH présentant une priorité supérieure ; et
déterminer de sauter le décodage du PDSCH parmi les au moins deux PDSCH présentant une priorité inférieure.

7. WD (22) selon l'une quelconque des revendications 1 à 6, dans lequel la circuiterie de traitement (84) est configurée pour déterminer l'état OOO en étant configurée pour amener le WD (22) à :
déterminer l'état OOO à l'aide d'une temporisation d'une information de commande de liaison descendante, DCI, hypothétique.

8. WD (22) selon l'une quelconque des revendications 1 à 7, dans lequel la circuiterie de traitement (84) est en outre configurée pour amener le WD (22) à :
indiquer un nombre maximal de réceptions de PDSCH parallèles sur un même symbole de multiplexage par répartition de fréquences orthogonales, OFDM par partie de bande passante que le WD (22) est capable de réaliser.

9. Procédé mis en œuvre dans un dispositif sans fil (22), WD, configuré pour communiquer avec un nœud de réseau, le procédé comprenant :
lorsque (S134) au moins un canal partagé de liaison descendante physique, PDSCH, est soumis à une planification semi-persistante, SPS, la détermination d'un état dans le désordre, OOO, qui est indépendant d'une temporisation relative d'une signalisation de canal de commande de liaison descendante physique, PDCCH, dans lequel la temporisation relative du PDCCH est un temps d'arrivée de signalisation correspondant à des ressources attribuées du PDSCH, **caractérisé en ce que**
lorsqu'un état 000 est détecté en tant que chevauchement d'au moins deux PDSCH dans le temps, la détermination du PDSCH parmi les au moins deux PDSCH à décoder et du PDSCH parmi les au moins deux PDSCH à ne pas décoder sur la base au moins en partie d'au moins l'un parmi : un indicateur de temporisation d'accusé de réception, ACK, de demande de répétition automatique hybride, HARQ, une temporisation relative entre les au moins deux PDSCH et une qualité de service pour chaque canal logique associé au PDSCH respectif.

10. Procédé selon la revendication 9, comprenant en outre :
lorsqu'un état OOO est détecté, la continuation du traitement de l'au moins un PDSCH en cours de traitement à un temps de détection de l'état OOO.

11. Procédé selon la revendication 9, comprenant en outre :
lorsqu'un état OOO est détecté en tant que chevauchement d'au moins deux PDSCH dans le temps, la priorisation des au moins deux PDSCH.

12. Procédé selon la revendication 11, comprenant en outre :
le décodage du PDSCH parmi les au moins deux PDSCH présentant une priorité supérieure ; et
la détermination de sauter le décodage du PDSCH parmi les au moins deux PDSCH présentant une priorité inférieure.

13. Procédé selon l'une quelconque des revendications 9 à 12, dans lequel la détermination de l'état 000 comprend en outre :
la détermination de l'état OOO à l'aide d'une temporisation d'une information de commande de liaison descendante, DCI, hypothétique.
